# FASCICULE DE BREVET EUROPEEN

(11) **EP 0 668 466 B1**
(45) Date de publication et mention de la délivrance du brevet: **22.07.1998**
(21) Numéro de dépôt: 95420039.0
(22) Date de dépôt: 20.02.1995
(51) Int. Cl.: F16L 51/02

(54) **Soufflet de raccordement de tuyauteries ou d'appareils pour fonctionnement sous vide**
Balg zum Verbinden von unter Vakuum betriebenen Rohren oder Geräten
Bellows for connecting pipes or devices working under vacuum

(30) Priorité: 22.02.1994 FR 9402220
(43) Date de publication de la demande: 23.08.1995
(73) Titulaire: LE CARBONE LORRAINE, 92400 Courbevoie (FR)
(72) Inventeur: Totino, Ernest, F-57130 Ruffine (FR); Mathieu, Alain, F-54121 Vandieres (FR); Wojtusciszyn, Henri, F-54530 Pagny sur Moselle (FR); Gouthier, Bernard, F-54470 Thiaucourt (FR)
(74) Mandataire: Mougeot, Jean-Claude

(56) Documents cités:
- GB-A- 1 445 985
- US-A- 2 930 116
- US-A- 3 135 295
- US-A- 3 626 988
- US-A- 3 976 312

## Description

### DOMAINE DE L'INVENTION

L'invention concerne les soufflets utilisés, en particulier dans les installations de génie chimique, pour raccorder deux tuyauteries, une tuyauterie et un appareil, ou deux appareils entre eux, et véhiculant un fluide plus ou moins corrosif dans certaines conditions de température et de pression. Elle concerne plus spécialement les soufflets destinés à des installations fonctionnant sous vide.

### ART ANTERIEUR

Les soufflets utilisés sont généralement constitués d'un tube ondulé, comportant au creux des ondes un anneau extérieur torique, et fixé aux tuyauteries par des brides de raccordement. Ils doivent permettre d'absorber les dilatations thermiques et les écarts de montage dans le sens longitudinal, ce qui se traduit par un débattement maximum Δx, de part et d'autre de la position initiale, ainsi que les défauts d'alignement et les dilatations latérales des tuyauteries, ce qui se traduit par un débattement maximum dans un sens perpendiculaire à l'axe du soufflet Δy. La souplesse du soufflet doit être suffisante pour éviter, sous l'effet des variations brutales de température ou de pression, la rupture d'appareils fragiles, par exemple en verre, en émail ou en graphite. Enfin, le soufflet doit résister à la corrosion du fluide transporté et à la température de service et il doit conserver son niveau d'étanchéité à la pression de fonctionnement. Une solution généralement adoptée pour satisfaire ces exigences est de réaliser le soufflet en polytetrafluoréthylène (PTFE) par conformation à chaud et sous pression d'un tube.

Pour fonctionner dans des conditions de pression particulières, on peut être amené à renforcer le soufflet pour améliorer sa résistance à l'éclatement. Ainsi, le brevet FR 2088677 de la demanderesse décrit un soufflet pour utilisation sous pression élevée comportant au sommet des ondes une enveloppe extérieure creuse de forme hémitorique en plus de l'anneau extérieur torique, ces renforts permettant de bien résister à la pression tout en conservant au soufflet ses qualités de souplesse et l'amplitude des débattements.

### PROBLEME POSE

Les soufflets prévus pour fonctionner à pression normale ou à pression élevée ne conviennent pas très bien en fonctionnement sous vide, surtout pour les grands diamètres et ne présentent pas les conditions de sécurité requises.

Une première solution consiste à augmenter l'épaisseur de la membrane du soufflet, mais on diminue alors la souplesse et les débattements deviennent trop faibles, en particulier pour les diamètres importants. C'est pourquoi la demanderesse ne propose des soufflets de ce type pour fonctionnement sous vide que jusqu'au diamètre de 300 mm avec une longueur limitée à 125 mm, le débattement maximum +/-Δx étant alors de 15 mm.

Une autre solution possible consiste à utiliser des anneaux de renfort, mais placés cette fois à l'intérieur du soufflet. Il faut alors veiller à ce que le matériau choisi résiste à la corrosion du fluide transporté. D'autre part, ces anneaux de renfort peuvent gêner la déformation des ondes, nécessaire pour s'adapter aux variations de température et de pression, particulièrement pour les grands diamètres. Enfin, de tels renforts ne sont pas faciles à mettre en place à l'intérieur des ondes du soufflet.

Le but de la présente invention est donc de permettre la réalisation de soufflets de raccordement de tuyauteries de grand diamètre fonctionnant sous vide, présentant la même souplesse et les mêmes débattements longitudinaux et perpendiculaires que les soufflets fonctionnant sous pression normale, tout en assurant une bonne résistance à la corrosion vis-à-vis du fluide transporté et une sécurité identique.

### OBJET DE L'INVENTION

L'invention a pour objet un soufflet de raccordement de tuyauteries ou d'appareils fonctionnant sous vide partiel, constitué d'un tube ondulé renforcé extérieurement par des anneaux au creux des ondes, caractérisé en ce qu'il comporte des anneaux de renforts toriques à l'intérieur du sommet des ondes et que la longueur des anneaux est ajustable de manière à s'adapter à la déformation des ondes en service.

Un moyen simple d'obtenir un anneau de longueur ajustable à la déformation de l'onde est de prévoir un anneau ouvert dont les extrémités coulissent dans un tube souple.

Le soufflet peut être réalisé en PTFE. Les anneaux de renfort à l'intérieur du sommet des ondes peuvent être en PTFE massif, en métal résistant à la corrosion du fluide transporté, ou en métal revêtu de polymère fluoré.

### DESCRIPTION DE L'INVENTION

La figure 1 représente en demi-vue de dessus et demi-coupe axiale le soufflet selon l'invention.

La figure 2 représente, en vue de face, un anneau de renfort de longueur ajustable selon l'invention.

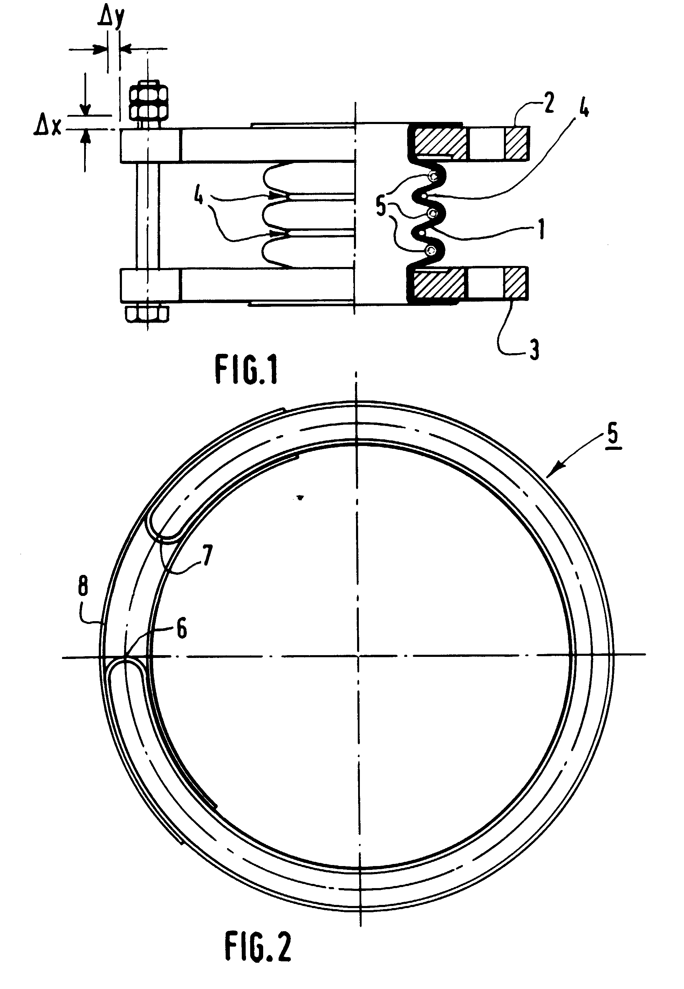

Le soufflet représenté figure 1 est constitué d'un tube ondulé (1), comportant un certain nombre d'ondes identiques, généralement de 3 à 5, qui vient se raccorder aux tuyauteries ou appareils par l'intermédiaire de brides (2) et (3).

Le soufflet peut être réalisé en tout matériau flexible résistant à la corrosion du fluide transporté à la température de fonctionnement. On peut, en particulier, le réaliser en PTFE, qui présente une grande inertie chimique et tient jusqu'à 230°C, par extrusion pâteuse de poudres fines pour former un tube qu'on déforme ensuite à chaud et sous pression pour obtenir l'ondulation souhaitée.

Chaque creux d'onde extérieur est renforcé par un anneau torique (4), généralement en acier inoxydable. A l'intérieur de chaque sommet d'onde, on place un anneau torique (5). Cet anneau, représenté à la figure 2, est légèrement ouvert, ce qui va d'abord faciliter sa mise en place à l'intérieur de l'onde correspondante. D'autre part, pour obtenir que l'anneau suive les déformations de l'onde dues aux variations de température et de pression, qu'il évite de se voiler et que ses extrémités libres (6) et (7) ne détériorent la surface intérieure du soufflet, les extrémités de l'anneau sont placées à l'intérieur d'un tube souple (8) dans lequel elles peuvent coulisser.

Comme ils sont situés à l'intérieur du soufflet, les anneaux (5) doivent pouvoir résister à la corrosion du fluide transporté. Ils peuvent être réalisés en métal, par exemple des aciers inoxydables ou spéciaux, en PTFE massif ou, et c'est souvent la solution la plus économique, en fil métallique revêtu de polymère fluoré. Dans ce cas, on peut évidemment se contenter d'un métal plus banal (acier ordinaire ou acier inoxydable courant). Le polymère fluoré sera choisi de manière à être thermorétractable et soudable pour avoir une protection efficace de l'anneau et de ses extrémités; ce peut être, par exemple, du perfluoroalcoxy (PFA), soudable d'une manière plus fiable que le PTFE.

Le tube (8) dans lequel coulissent les extrémités (6) et (7) de l'anneau (5) doit posséder les mêmes qualités de résistance à la corrosion que l'anneau, être suffisamment souple pour épouser la forme de l'anneau et la surface du soufflet et pouvoir coulisser facilement, ce qui conduit, par exemple, au choix du PTFE. La longueur du tube doit être suffisante pour que les extrémités de l'anneau restent à l'intérieur au cours des déformations du soufflet.

Pour certains utilisateurs qui souhaitent employer le même soufflet pour des installations sous pression et des installations fonctionnant sous vide, on peut combiner le renfort intérieur selon l'invention avec le renfort extérieur décrit dans l'art antérieur, c'est-à-dire des anneaux toriques (4) situés au creux des ondes et des coquilles de renfort aux sommets des ondes pour les plus hautes pressions.

Les soufflets selon l'invention peuvent résister à un vide poussé jusqu'à 2 torr et une température de 180°C, y compris pour des diamètres élevés. Les longueurs et les épaisseurs de la membrane PTFE sont les mêmes pour les utilisations en pression et celles sous vide, en conservant des débattements longitudinaux et latéraux suffisants.

### EXEMPLE

On a réalisé un soufflet à 3 ondes en PTFE de diamètre nominal 600 mm, de longueur entre brides 175 mm et d'épaisseur de membrane 3,8 mm.

Dans chacune des ondes on a placé un anneau ouvert, réalisé en fil d'acier inoxydable AISI 304 de diamètre 10 mm revêtu de PFA thermorétractable. Les extrémités de l'anneau coulissent dans un tube de PTFE de longueur 60 mm et d'épaisseur 1 mm.

Un tel soufflet peut fonctionner sous un vide de 2 torr à 180°C avec un débattement longitudinal Δx de 30 mm et un débattement latéral Δy de 4 mm.

## Revendications

1. Soufflet de raccordement de tuyauteries ou d'appareils fonctionnant sous vide partiel constitué d'un tube ondulé (1) renforcé extérieurement par des anneaux (4) au creux des ondes, caractérisé en ce qu'il comporte des anneaux de renfort toriques (5) à l'intérieur du sommet des ondes et que la longueur des anneaux (5) est ajustable de manière à s'adapter à la déformation des ondes en service.

2. Soufflet selon la revendication 1, caractérisé en ce que chaque anneau (5) à l'intérieur du sommet des ondes est ouvert et que ses extrêmités (6,7) coulissent à l'intérieur d'un tube souple (8).

3. Soufflet selon l'une des revendications 1 et 2, caractérisé en ce que le soufflet est en PTFE.

4. Soufflet selon l'une des revendications 1 à 3, caractérisé en ce que les anneaux de renfort (5) à l'intérieur du sommet des ondes sont réalisés en fil métallique revêtu de polymère fluoré.

5. Soufflet selon la revendication 4, caractérisé en ce que le polymère fluoré est thermorétractable et soudable.

6. Soufflet selon la revendication 2, caractérisé en ce que le tube (1) est en PTFE.

## Patentansprüche

1. Balg zum Verbinden von unter Teilvakuum betriebenen Rohren oder Geräten, bestehend aus einem Wellrohr (1), welches außenseitig durch im Wellental angeordnete Ringe (4) verstärkt ist, dadurch gekennzeichnet, daß er innen im Wellenkamm Rundversteifungsringe (5) aufweist und daß die Ringe (5) in ihrer Länge regulierbar sind, so daß sie sich der Verformung der Wellen im Betrieb anpassen.

2. Balg nach Anspruch 1, dadurch gekennzeichnet, daß jeder Ring (5) innen im Wellenkamm offen ist und daß seine Enden (6, 7) in einem flexiblen Rohr (8) gleiten.

3. Balg nach einem der Ansprüche 1 und 2, dadurch gekennzeichnet, daß der Balg aus PTFE besteht.

4. Balg nach einem der Ansprüche 1 bis 3, dadurch gekennzeichnet, daß die Versteifungsringe (5) innen im Wellenkamm als Metalldraht ausgeführt sind, der mit Fluorpolymer beschichtet ist.

5. Balg nach Anspruch 4, dadurch gekennzeichnet, daß das Fluorpolymer wärmeschrumpfend und schweißbar ist.

6. Balg nach Anspruch 2, dadurch gekennzeichnet, daß das Rohr (1) aus PTFE besteht.

## Claims

1. A bellows for connecting hoses or apparatus operating in a partial vacuum, constituted by a corrugated tube (1) reinforced on the outside by rings (4) at the troughs of the corrugations, characterized in that it includes toric reinforcing rings (5) on the inside of the crest of the corrugations, and that the length of the rings (5) is adjustable in such as way as to adapt to the deformation of the corrugations in service.

2. The bellows according to claim 1, characterized in that each ring (5) on the inside of the crest of the corrugations is open, and that its ends (6,7) slide inside a flexible tube (8).

3. The bellows according to one of claims 1 and 2, characterized in that the bellows is of PTFE.

4. The bellows according to one of claims 1-3, characterized in that the reinforcing rings (5) on the inside of the crest of the corrugations are made of metal wire coated with polymer containing fluorine.

5. The bellows according to claim 4, characterized in that the polymer containing fluorine is heat-shrinkable and weldable.

6. The bellows according to claim 2, characterized in that the tube (1) is of PTFE.
